# EUROPÄISCHE PATENTSCHRIFT

(11) **EP 2 203 103 B1**
(45) Veröffentlichungstag und Bekanntmachung des Hinweises auf die Patenterteilung: **26.03.2014**
(21) Anmeldenummer: 08785586.2
(22) Anmeldetag: 16.08.2008
(51) Int. Cl.: F16D 1/068

(54) **REINIGUNGSMASCHINE**
CLEANING MACHINE
MACHINE DE NETTOYAGE

(30) Priorität: 30.10.2007 DE 102007053351
(43) Veröffentlichungstag der Anmeldung: 07.07.2010
(73) Patentinhaber: Alfred Kärcher GmbH & Co. KG, 71364 Winnenden (DE)
(72) Erfinder: POCH, Alfred, 71549 Auenwald (DE); ÖSTERLE, Michael, 71554 Weissach (DE)
(74) Vertreter: Hoeger, Stellrecht & Partner Patentanwälte
(86) Internationale Anmeldenummer: PCT/EP2008/006744
(87) Internationale Veröffentlichungsnummer: WO 2009/056185

(56) Entgegenhaltungen:
- EP-A- 1 449 474
- DE-B3-102005 045 310
- DE-U1- 20 112 322
- US-A- 3 019 042
- US-A- 4 357 137
- US-A- 5 421 053

## Beschreibung

Die Erfindung betrifft eine Reinigungsmaschine mit den Merkmalen des Oberbegriffes von Patentanspruch 1.

Eine Reinigungsmaschine mit mindestens einem Reinigungswerkzeug, das über eine drehbar an einem Träger gelagerte Antriebswelle drehend antreibbar ist, wobei die Antriebswelle ein Drehmomentübertragungsglied trägt, das mit Vorsprüngen in Mitnahmeausnehmungen des Reinigungswerkzeuges eingreift, ist in Form einer Kehrmaschine aus der Patentschrift DE 198 20 628 C1 bekannt. Als Reinigungswerkzeug kommt bei der Kehrmaschine eine rotierend antreibbare Bürstenwalze zum Einsatz, die an ihren beiden Stirnseiten an einem Rahmen drehbar gelagert ist. Der Drehantrieb der Bürstenwalze erfolgt über ein Zahnrad, das an einer Antriebswelle angeordnet ist und mit seinen Zähnen in Mitnahmeausnehmungen der Bürstenwalze eingreift. Das Zahnrad ist einteilig mit der rotierend antreibbaren Antriebswelle ausgeführt, wobei die Zähne durch entsprechende Nachbearbeitung der Antriebswelle aus der Welle ausgefräst werden. Dies ist mit beträchtlichen Fertigungskosten verbunden.

Aus der europäischen Patentschrift EP 1 279 363 B1 ist eine Reinigungsmaschine in Form einer Schrubbmaschine bekannt, bei der das Reinigungswerkzeug über eine Antriebswelle in Drehung versetzt wird, die über eine Nut und Feder-Verbindung drehfest mit einem Zahnrad verbunden ist, das das Drehmomentübertragungsglied ausbildet. Die Bereitstellung der Nut und Feder-Verbindung ist ebenfalls mit nicht unbeträchtlichen Fertigungskosten verbunden.

Aus US-A-3,019,042 ist eine Reinigungsmaschine mit den Merkmalen des Oberbegriffes von Patentanspruch 1 bekannt. Bei dieser Reinigungsmaschine ist auf eine Antriebswelle ein als Kunststoffformteil ausgestaltetes Drehmomentübertragungsglied aufgerastet, über das von der Antriebswelle ein Drehmoment auf ein Reinigungswerkzeug übertragen werden kann. Hierzu greift das Drehmomentübertragungsglied mit.Vorsprüngen in Mitnahmeausnehmungen des Reinigungswerkzeuges ein.

Reinigungsmaschinen mit Drehmomentübertragungsgliedern, die drehfest an einer Antriebswelle gehalten sind und mittels Vorsprünge in Mitnahmeausnehmungen eines Reinigungswerkzeuges eingreifen, sind auch in US-A-5,421,053 und DE 201 12 322 U1 beschrieben.

Aufgabe der vorliegenden Erfindung ist es, eine Reinigungsmaschine der eingangs genannten Art derart weiterzubilden, dass sie kostengünstiger herstellbar ist.

Diese Aufgabe wird durch eine Reinigungsmaschine mit den Merkmalen von Patentanspruch 1 gelöst.

Das Drehmomentübertragungsglied ist in Form eines Kunststoffformteils ausgestaltet, wohingegen die Antriebswelle aus Metall gefertigt ist. Auf die metallische Antriebswelle kann ein Lager, insbesondere ein Kugellager, aufgepresst sein. An die metallische Antriebswelle ist das Drehmomentübertragungsglied angeformt, das die Drehverbindung zwischen der Antriebswelle und dem Reinigungswerkzeug gewährleistet. Die Anformung des Drehmomentübertragungsgliedes an die Antriebswelle ermöglicht eine beachtliche Reduzierung der Fertigungskosten. Erfindungsgemäß ist das Drehmomentübertragungsglied auf die Antriebswelle aufgegossen. Damit können die Fertigungskosten besonders gering gehalten werden.

Die erfindungsgemäße Ausgestaltung hat auch den Vorteil, dass das Drehmomentübertragungsglied verglichen mit der Antriebswelle aus einem weicheren Material gefertigt ist. Dies ermöglicht eine gedämpfte Lagerung, so dass die Geräuschentwicklung beim Betrieb der Reinigungsmaschine reduziert werden kann.

Der Einsatz eines an die Antriebswelle angeformten Kunststoffmaterials für das Drehmomentübertragungsglied hat darüber hinaus den Vorteil, dass das verglichen mit dem Metall der Antriebswelle verhältnismäßig weiche Kunststoffmaterial des Drehmomentübertragungsgliedes eine flächige Anlage der Vorsprünge des Drehmomentübertragungsgliedes an den Mitnahmeausnehmungen des Reinigungswerkzeuges ermöglicht. Die flächige Anlage verringert die Belastung des Drehmomentübertragungsgliedes bei der Übertragung eines Drehmomentes von der Antriebswelle auf das Reinigungswerkzeug. Dies wiederum führt zu einer Verlängerung der Lebensdauer.

Wie bereits erläutert, ist es günstig, wenn die Härte des Drehmomentübertragungsgliedes geringer ist als die Härte des Antriebsrades. Besonders günstig ist es, wenn das Drehmomentübertragungsglied eine Shore-Härte von 60 bis 80 aufweist, insbesondere eine Shore-Härte von 70. Das Drehmomentübertragungsglied ist somit verhältnismäßig weich. Dies ermöglicht nicht nur eine Dämpfung der Lagerung des Reinigungswerkzeuges am Träger der Reinigungsmaschine und damit eine verringerte Geräuschentwicklung beim Betrieb der Reinigungsmaschine, sondern durch die Shore-Härte von 60 bis 80, insbesondere durch eine Shore-Härte von 70, wird eine linienförmige Belastung des Drehmomentübertragungsgliedes zuverlässig vermieden.

Bei einer besonders bevorzugten Ausgestaltung ist das Drehmomentübertragungsglied aus einem Polyurethanmaterial gefertigt. Das Polyurethanmaterial kann auf einfache Weise auf die nur grob bearbeitete metallische Antriebswelle aufgegossen werden. Die Antriebswelle kann beispielsweise lediglich durch Sandstrahlen behandelt sein. Zur Verbesserung der Haftung des Polyurethanmaterials an der Antriebswelle kann diese vor dem Aufgießen des Polyurethanmaterials mit einem Haftvermittler behandelt werden. Derartige Haftvermittler sind dem Fachmann bekannt.

Das Drehmomentübertragungsglied weist nach außen abstehende, vorzugsweise radial ausgerichtete Vorsprünge auf. Besonders günstig ist es, wenn das Drehmomentübertragungsglied ein sternförmiges Querschnittsprofil mit abgerundeten Spitzen aufweist. Es hat sich gezeigt, dass ein derartiges Querschnittsprofil besonders zuverlässig eine flächige Anlage des Drehmomentübertragungsgliedes an den Mitnahmeausnehmungen des Reinigungswerkzeuges ermöglicht. Außerdem wird durch ein derartiges Querschnittsprofil die Zentrierung des Drehmomentübertragungsgliedes in den Mitnahmeausnehmungen des Reinigungswerkzeuges erleichtert.

Bei einer besonders bevorzugten Ausgestaltung der erfindungsgemäßen Reinigungsmaschine ist am Drehmomentübertragungsglied mindestens ein in axialer Richtung vorstehendes Toleranzausgleichsglied angeordnet. Das mindestens eine Toleranzausgleichsglied ermöglicht einen Toleranzausgleich in axialer Richtung des Reinigungswerkzeuges, also in dessen Längsrichtung. Fertigungstoleranzen können dadurch auf einfache Weise kostengünstig ausgeglichen werden.

Günstig ist es, wenn das mindestens eine Toleranzausgleichsglied elastisch verformbar ist. Dies ermöglicht nicht nur einen einfachen Ausgleich von Fertigungstoleranzen sondern auch eine elastische Vorspannung des Reinigungswerkzeugs in axialer Richtung.

Vorzugsweise sind mehrere Toleranzausgleichsglieder im Abstand zueinander angeordnet. Es können beispielsweise drei in gleichmäßigem Abstand zueinander angeordnete Toleranzausgleichsglieder zum Einsatz kommen, die über den Umfang der Antriebswelle verteilt angeordnet sind.

Besonders günstig ist es, wenn das mindestens eine Toleranzausgleichsglied aus einem Kunststoffmaterial gefertigt ist. Es kann insbesondere vorgesehen sein, dass das Toleranzausgleichsglied aus demselben Kunststoffmaterial gefertigt ist wie das Drehmomentübertragungsglied.

Von Vorteil ist es, wenn das mindestens eine Toleranzausgleichsglied und das Drehmomentübertragungsglied einstückig miteinander verbunden sind und ein einteiliges Kunststoffformteil ausbilden. Dies ermöglicht eine besonders kostengünstige Fertigung, da das mindestens eine Toleranzausgleichsglied und das Drehmomentübertragungsglied in einem gemeinsamen Fertigungsschritt hergestellt werden können.

Das Reinigungswerkzeug ist vorzugsweise als Bürstenwalze ausgestaltet. Letztere kann einen zylindrischen Walzenkörper aufweisen, der die Mitnahmeausnehmungen umfasst und von dem außenseitig eine Vielzahl von Reinigungsborsten abstehen.

Die nachfolgende Beschreibung einer bevorzugten Ausführungsform der Erfindung dient im Zusammenhang mit der Zeichnung der näheren Erläuterung. Es zeigen:
- Figur 1:: eine Seitenansicht einer erfindungsgemäßen Reinigungsmaschine;
- Figur 2:: eine Teilschnittansicht eines mittels einer Antriebswelle an einem Träger gelagerten Reinigungswerkzeuges der Reinigungsmaschine aus Figur 1;
- Figur 3:: eine Seitenansicht der Antriebswelle aus Figur 2;
- Figur 4:: eine Vorderansicht der Antriebswelle in Richtung von Pfeil A aus Figur 3 und
- Figur 5:: eine Schnittansicht der Antriebswelle längs der Linie 5-5 in Figur 3.

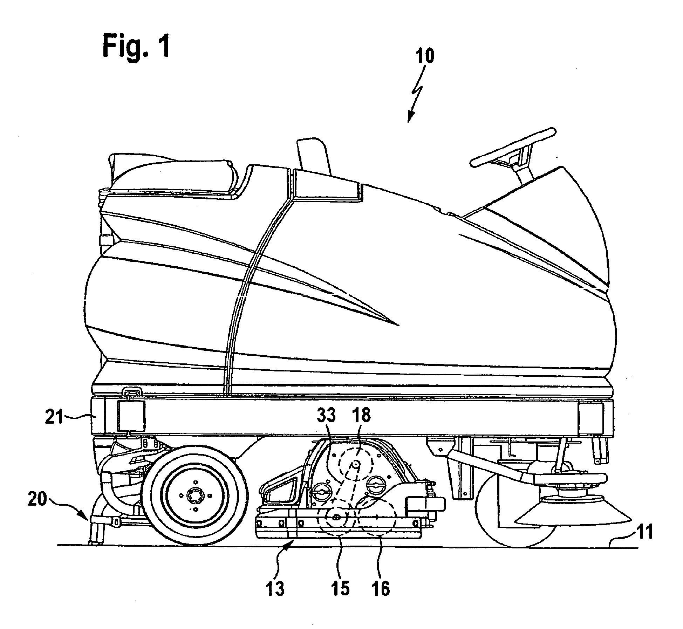

In Figur 1 ist schematisch eine erfindungsgemäße Reinigungsmaschine in Form einer Bodenreinigungsmaschine 10 dargestellt. Diese ist entlang einer zu reinigenden Bodenfläche 11 verfahrbar und trägt unterseitig eine Reinigungsvorrichtung 13, die in an sich bekannter Weise auf die zu reinigende Bodenfläche 11 absenkbar und von dieser anhebbar ist. Die Reinigungsvorrichtung 13 umfasst zwei parallel zueinander ausgerichtete Reinigungswerkzeuge in Form zweier Bürstenwalzen 15, 16, die jeweils von einem Antriebsmotor in Drehung versetzbar sind. In Figur 1 ist lediglich der Antriebsmotor 18 der Bürstenwalze 15 dargestellt, ein entsprechender Antriebsmotor ist auch für die Bürstenwalze 16 vorgesehen, zur Erzielung eines besseren Übersicht jedoch in der Zeichnung nicht dargestellt.

Die Bodenreinigungsmaschine 10 weist in bekannter Weise einen Reinigungsflüssigkeitsbehälter und einen Schmutzflüssigkeitsbehälter auf. Dem Reinigungsflüssigkeitsbehälter kann Reinigungsflüssigkeit, vorzugsweise Wasser, entnommen werden, die auf die Bodenfläche 11 aufgespritzt werden kann, um den Reinigungsvorgang zu erleichtern. Schmutzige Flüssigkeit, das heißt ein Gemisch aus Schmutz und Reinigungsflüssigkeit, kann mittels einer Schmutzaufnahmevorrichtung 20, die an der Rückseite 21 der Bodenreinigungsmaschine 10 angeordnet ist, in bekannter Weise von der Bodenfläche 11 abgesaugt und in den Schmutzflüssigkeitsbehälter überführt werden.

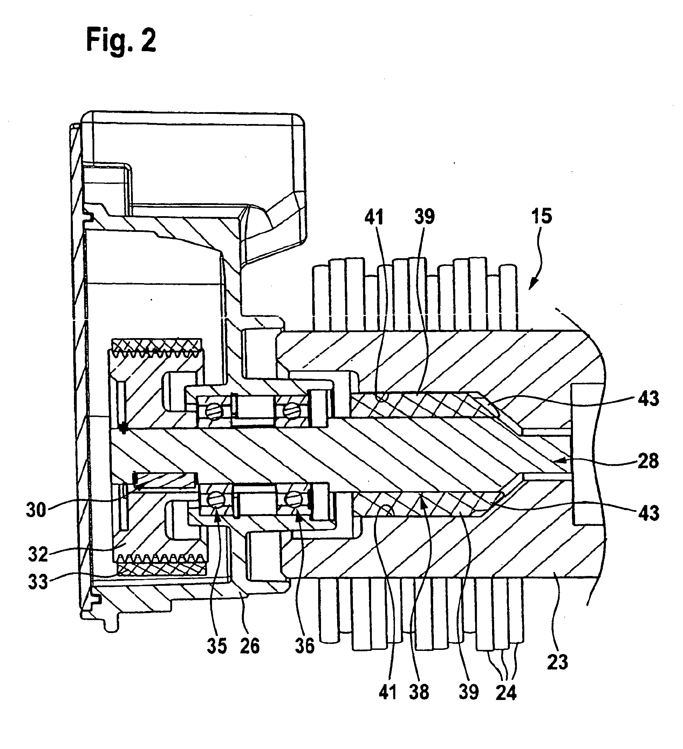

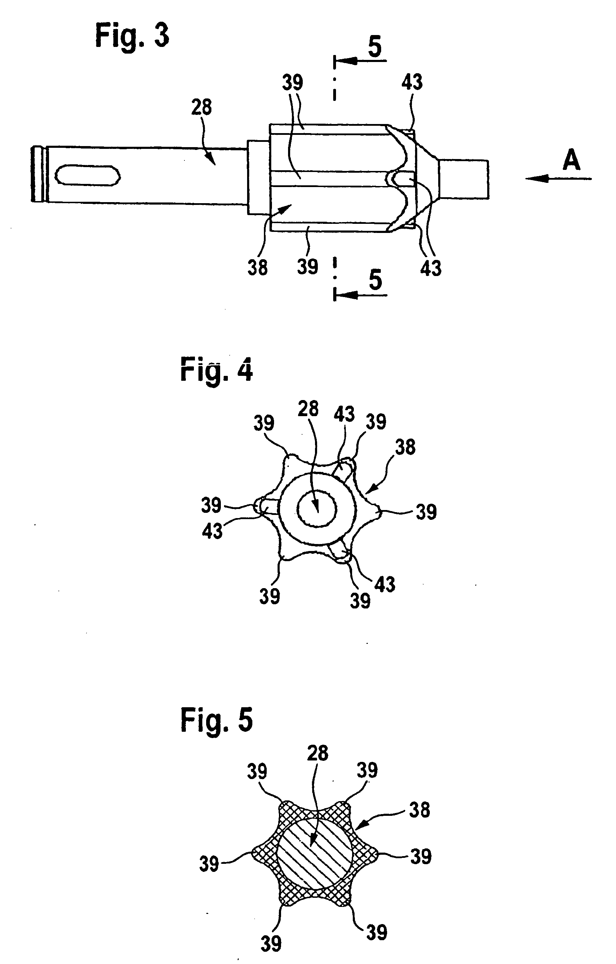

Die beiden Bürstenwalzen 15 und 16 weisen jeweils einen zylindrischen Walzenkörper 23 auf, von dem außenseitig eine Vielzahl von Reinigungsborsten 24 radial abstehen. Stirnseitig sind die Walzenkörper 23 jeweils über eine Antriebsweille 28 an einem Träger 26 der Reinigungsvorrichtung 13 drehbar gelagert, wobei über die Antriebswelle 28 der Walzenkörper 23 auch in Drehung versetzt wird. Die Antriebswelle 28 ist in Figur 2 und insbesondere in den Figuren 3 bis 5 im Einzelnen dargestellt. Sie ist aus Metall gefertigt und an einem Ende über eine Nut- und Federverbindung 30 drehfest mit einer Riemenscheibe 32 verbunden, die über einen Riemen 33 mit dem Antriebsmotor der jeweiligen Bürstenwalze gekoppelt ist.

Der Riemenscheibe 32 unmittelbar benachbart trägt die Antriebswelle 28 ein erstes Kugellager 35 und im axialen Abstand zu diesem ein zweites Kugellager 36, über die die Antriebswelle 28 drehbar am Träger 26 gehalten ist.

In axialem Abstand zum zweiten Kugellager 36 ist die Antriebswelle 28 von einem Drehmomentübertragungsglied in Form eines aus Kunststoff, nämlich aus einem Polyurethanmaterial gefertigten Antriebsrades 38 umgeben, das nach Behandlung der Antriebswelle 28 mit einem Haftvermittler auf die Antriebswelle 28 aufgegossen wurde. Das Antriebsrad 38 weist eine sternförmige Außenkontur auf mit abgerundeten Spitzen. Dies wird insbesondere aus Figur 5 deutlich. Es greift mit seinen radial nach außen abstehenden Vorsprüngen 39 in komplementär ausgestaltete Mitnahmeausnehmungen 41 des Walzenkörpers 23 ein und ermöglicht dadurch die Übertragung eines Drehmomentes von der Antriebswelle 28 auf den Walzenkörper 23.

In axialer Richtung, das heißt in Richtung der Längsachse der Antriebswelle 28, sind an drei der insgesamt sechs Vorsprünge 39 Toleranzausgleichsglieder in Form zapfenförmiger Verlängerungen 43 angeformt, die in gleichmäßigem Abstand zueinander angeordnet sind und die Antriebswelle 28 umgeben. Die Verlängerungen 43 sind einstückig mit dem Antriebsrad 38 verbunden, sie bilden ein einteiliges Kunststoffformteil aus einem Polyurethanmaterial aus, das an die Antriebswelle 28 angeformt ist.

Die Verlängerungen 43 sind gummielastisch verformbar und üben beim Einsetzen des Antriebsrades 38 in die korrespondierenden Mitnahmeausnehmungen 41 des Walzenkörpers 23 eine axiale Federkraft auf den Walzenkörper 23 aus. Eine zusätzliche Druckfeder zwischen dem Antriebsrad 38 und dem Walzenkörper 23 kann dadurch entfallen.

Das Antriebsrad 38 mit den Vorsprüngen 39 und die Verlängerungen 43 weisen eine beträchtlich geringere Härte auf als die Antriebswelle 28. Vorzugsweise weisen das Antriebsrad 38 und die Verlängerungen 43 eine Shore-Härte von 70 auf.

Das relativ weiche Material des Antriebsrades 38 und der Verlängerungen 43 ermöglicht eine flächige Anlage der Vorsprünge 39 und der Verlängerungen 43 an den Mitnahmeausnehmungen 41 des Walzenkörpers 23. Dies wiederum hat eine flächige Kraftbelastung des Antriebsrades 38 und der Verlängerungen 43 zur Folge, durch die der Verschleiß des Antriebsrades 38 und der Verlängerungen 43 gering gehalten werden kann. Darüber hinaus ermöglicht der Einsatz des gummielastischen Materials für das Antriebsrad 38 und die Verlängerungen 43 eine Dämpfung, so dass die Geräuschentwicklung beim Betrieb des Bodenreinigungsgerätes 10 verringert werden kann. Ein weiterer Vorteil des Einsatzes des gummielastischen Materials liegt darin, dass Schwingungen der Bürstenwalzen 15 und 16 vermieden werden können.

Die Herstellung des Antriebsrades 38 mit den Vorsprüngen 39 und der Verlängerungen 43 erfolgt dadurch, dass die metallische Antriebswelle 28, deren Oberfläche zuerst durch Sandstrahlen und anschließend mit einem Haftvermittler behandelt wurde, in eine Gießform eingebracht wird, und dass anschließend die Antriebswelle 28 in ihrem in die Mitnahmeausnehmungen des Walzenkörpers 23 eintauchenden Längsabschnitt mit Polyurethanmaterial umgossen wird unter Herstellung des Antriebsrades 38 und der axialen Verlängerungen 43. In einem anschließenden Fertigungsschritt können dann die beiden Kugellager 35 und 36 auf die metallische Antriebswelle 28 aufgepresst werden. Nach der Montage der Antriebswelle 28 am Träger 26 kann die Bürstenwalze 15 bzw. die Bürstenwalze 16 auf die Antriebwelle 28 aufgesetzt werden, wobei das auf die Antriebswelle 28 aufgegossene Antriebsrad 38 mit seinen Vorsprüngen 39 in die Mitnahmeausnehmungen 41 des Walzenkörpers 23 formschlüssig eintaucht und wobei die gummielastischen Verlängerungen 43 in axialer Richtung zusammengedrückt werden unter Ausübung einer axialen Federkraft auf den Walzenkörper 23.

## Patentansprüche

1. Reinigungsmaschine mit mindestens einem Reinigungswerkzeug (15, 16), das über eine drehbar an einem Träger (26) gelagerte Antriebswelle (28) drehend antreibbar ist, wobei die Antriebswelle (28) ein Drehmomentübertragungsglied (38) trägt, das mit Vorsprüngen (39) in Mitnahmeausnehmungen (41) des Reinigungswerkzeuges (15, 16) eingreift, wobei die Antriebswelle (28) aus Metall gefertigt ist und das Drehmomentübertragungsglied (38) als Kunststoffformteil an die Antriebswelle (28) angeformt ist, **dadurch gekennzeichnet, dass** das Drehmomentübertragungsglied (38) auf die Antriebswelle (28) aufgegossen ist.

2. Reinigungsmaschine nach Anspruch 1, **dadurch gekennzeichnet, dass** das Drehmomentübertragungsglied (38) eine Shore-Härte von 60 bis 80 aufweist.

3. Reinigungsmaschine nach einem der voranstehenden Ansprüche, **dadurch gekennzeichnet, dass** das Drehmomentübertragungsglied (38) aus einem Polyurethanmaterial gefertigt ist.

4. Reinigungsmaschine nach einem der voranstehenden Ansprüche, **dadurch gekennzeichnet, dass** das Drehmomentübertragungsglied (38) ein sternförmiges Querschnittsprofil mit abgerundeten Spitzen aufweist.

5. Reinigungsmaschine nach einem der voranstehenden Ansprüche, **dadurch gekennzeichnet, dass** am Drehmomentübertragungsglied (38) mindestens ein in axialer Richtung vorstehendes Toleranzausgleichsglied (43) angeordnet ist.

6. Reinigungsmaschine nach Anspruch 5, **dadurch gekennzeichnet, dass** das mindestens eine Toleranzausgleichsglied (43) elastisch verformbar ist.

7. Reinigungsmaschine nach Anspruch 5 oder 6, **dadurch gekennzeichnet, dass** mehrere Toleranzausgleichsglieder (43) im Abstand zueinander angeordnet sind.

8. Reinigungsmaschine nach Anspruch 5, 6 oder 7, **dadurch gekennzeichnet, dass** das mindestens eine Toleranzausgleichsglied (43) aus einem Kunststoffmaterial gefertigt ist.

9. Reinigungsmaschine nach einem der Ansprüche 5 bis 8, **dadurch gekennzeichnet, dass** das mindestens eine Toleranzausgleichsglied (43) und das Drehmomentübertragungsglied (38) einstückig miteinander verbunden sind und ein einteiliges Kunststoffformteil ausbilden.

10. Reinigungsmaschine nach einem der voranstehenden Ansprüche, **dadurch gekennzeichnet, dass** das Reinigungswerkzeug als Bürstenwalze (15; 16) ausgestaltet ist.

## Claims

1. Cleaning machine with at least one cleaning tool (15, 16) which is adapted to be driven in rotation by way of a drive shaft (28) that is rotatably mounted on a carrier (26), the drive shaft (28) carrying a torque transmission member (38) which engages, by way of protrusions (39), in drive recesses (41) of the cleaning tool (15, 16), the drive shaft (28) being made from metal, and the torque transmission member (38) being formed, as a plastics-material moulding, onto the drive shaft (28), **characterized in that** the torque transmission member (38) is moulded onto the drive shaft (28).

2. Cleaning machine according to Claim 1, **characterized in that** the torque transmission member (38) has a Shore hardness of 60 to 80.

3. Cleaning machine according to one of the preceding claims, **characterized in that** the torque transmission member (38) is produced from a polyurethane material.

4. Cleaning machine according to one of the preceding claims, **characterized in that** the torque transmission member (38) has a star-shaped cross-sectional profile with rounded tips.

5. Cleaning machine according to one of the preceding claims, **characterized in that** at least one axially projecting tolerance-compensating member (43) is disposed on the torque transmission member (38).

6. Cleaning machine according to Claim 5, **characterized in that** the at least one tolerance-compensating member (43) is elastically deformable.

7. Cleaning machine according to Claim 5 or 6, **characterized in that** a plurality of tolerance-compensating members (43) are spaced apart from one another.

8. Cleaning machine according to Claim 5, 6 or 7, **characterized in that** the at least one tolerance-compensating member (43) is produced from a plastics material.

9. Cleaning machine according to one of Claims 5 to 8, **characterized in that** the at least one tolerance-compensating member (43) and the torque transmission member (38) are connected integrally to one another and form a single-piece plastics-material moulding.

10. Cleaning machine according to one of the preceding claims, **characterized in that** the cleaning tool is configured as a brush roller (15; 16).

## Revendications

1. Machine de nettoyage comportant au moins un outil de nettoyage (15, 16) pouvant être entraîné en rotation au moyen d'un arbre d'entraînement (28) monté rotatif sur un support (26), l'arbre d'entraînement (28) portant un élément de transmission de couple (38) s'insérant au moyen de parties saillantes (39) dans des cavités d'entraînement (41) de l'outil de nettoyage (15, 16), l'arbre d'entraînement (28) étant fabriqué en métal et l'élément de transmission de couple (38) étant formé en tant que pièce moulée en matière plastique sur l'arbre d'entraînement (28), **caractérisée en ce que** l'élément de transmission de couple (38) est coulé sur l'arbre d'entraînement (28).

2. Machine de nettoyage selon la revendication 1, **caractérisée en ce que** l'élément de transmission de couple (38) présente une dureté Shore de 60 à 80.

3. Machine de nettoyage selon l'une quelconque des revendications précédentes, **caractérisée en ce que** l'élément de transmission de couple (38) est composé d'un matériau en polyuréthane.

4. Machine de nettoyage selon l'une quelconque des revendications précédentes, **caractérisée en ce que** l'élément de transmission de couple (38) présente un profil en section transversale en forme d'étoile aux pointes arrondies.

5. Machine de nettoyage selon l'une quelconque des revendications précédentes, **caractérisée en ce qu'**au moins un élément de compensation des tolérances (43) faisant saillie dans la direction axiale est agencé sur l'élément de transmission de couple (38).

6. Machine de nettoyage selon la revendication 5, **caractérisée en ce que** le ou les éléments de compensation des tolérances (43) sont élastiquement déformables.

7. Machine de nettoyage selon la revendication 5 ou 6, **caractérisée en ce que** plusieurs éléments de compensation des tolérances (43) sont espacés les uns des autres.

8. Machine de nettoyage selon la revendication 5, 6 ou 7, **caractérisée en ce que** le ou les éléments de compensation des tolérances (43) sont fabriqués en matière plastique.

9. Machine de nettoyage selon l'une quelconque des revendications 5 à 8, **caractérisée en ce que** le ou les éléments de compensation des tolérances (43) et l'élément de transmission de couple (38) sont reliés ensemble d'une seule pièce et forment une pièce moulée en matière plastique monobloc.

10. Machine de nettoyage selon l'une quelconque des revendications précédentes, **caractérisée en ce que** l'outil de nettoyage est conçu comme une brosse cylindrique (15 ; 16).
